# FASCICULE DE BREVET EUROPEEN

(11) **EP 2 251 554 B1**
(45) Date de publication et mention de la délivrance du brevet: **30.01.2013**
(21) Numéro de dépôt: 10162096.1
(22) Date de dépôt: 06.05.2010
(51) Int. Cl.: F16B 7/04

(54) **Dispositif de fixation entre une tringle de manivelle de volet roulant et un organe lié en rotation à une sortie de caisson de volet ou à la manivelle**
Vorrichtung zur Befestigung zwischen einer Handkurbelstange eines Rollladens und einem Drehorgan am Ausgang des Rollladenkastens oder an der Handkurbel
Attachment device between a handle rod of a roller shutter and a member rotatably connected to a shutter casing output or to the handle

(30) Priorité: 15.05.2009 FR 0902357
(43) Date de publication de la demande: 17.11.2010
(73) Titulaire: Zurfluh Feller, 25150 Autechaux Roide (FR)
(72) Inventeur: Olmi, Marc, 25150 Pont-de-Roide (FR); Allemand, Jean-Marie, 25190 Villars-sous-Dampjoux (FR)
(74) Mandataire: Michardière, Bernard

(56) Documents cités:
- DE-A1- 3 800 275
- US-A1- 2007 017 072
- US-B1- 6 565 280

## Description

L'invention est relative à un dispositif de fixation entre une tringle de manivelle de volet roulant et un organe lié en rotation à une sortie de caisson de volet ou à la manivelle, conformément au préambule de la revendication 1.

La tringle de manivelle se présente dans la majeure partie des cas sous forme d'une pièce tubulaire, à section circulaire, l'assemblage avec ledit organe se faisant soit par l'intérieur de la pièce tubulaire, soit par l'extérieur en coiffant la pièce. La fixation de la tringle de manivelle et la transmission du couple de manoeuvre en partie haute, côté sortie de caisson, et en partie basse, côté manivelle, se font couramment à l'aide d'une goupille ou d'une vis perpendiculairement au travers de l'ensemble.

Dans le cas d'une goupille, l'inconvénient principal réside en ce que la goupille est livrée non montée et nécessite un outillage, par exemple un vérin, pour monter en force cette goupille afin d'éviter son démontage. On connaît une solution décrite dans le document DE 90 05 759.7 U1 selon laquelle la goupille n'est pas montée en force, mais arrêtée en translation par une bague extérieure coulissante qui vient chapeauter l'ensemble. Selon cette solution, il existe une pièce supplémentaire indépendante qui peut se perdre. La bague extérieure est en saillie sur la tringle, et bien visible.

Dans le cas d'une vis, il faut également un outil de pose type tournevis ou visseuse, certes qui est disponible plus facilement en atelier ou sur chantier. Mais l'esthétique d'une vis reste discutable. En outre, la vis constitue toujours une pièce supplémentaire à manipuler au moment de l'assemblage, et peut échapper à l'installateur.

EP 0 949 402 prévoit un tenon solidaire de l'organe, engagé dans un élément extérieur creux solidaire de la tringle. Une liaison de forme est prévue entre l'élément extérieur creux et le tenon pour assurer la liaison en rotation. L'arrêt en translation axiale est assuré par une goupille solidaire d'une bague ouverte qui est clipée extérieurement sur la pièce tubulaire. Au moment de l'assemblage, une rampe en extrémité du tenon vient faire reculer élastiquement la goupille qui s'engage ensuite dans un trou perpendiculaire au tenon pour arrêter axialement l'ensemble. Ce clip comprend donc une bague extérieure qui reste largement visible en extrémité de la tringle et peut s'échapper facilement par simple accrochage lors des manipulations, ce qui risque de créer des désordres sur un chantier. En outre, la bague clipée étant visible à l'extérieur de la tringle, il faut qu'elle s'accorde aux différents coloris de la tringle, ce qui complique la maintenance.

On connaît également d'après FR 2 908 450, au nom de la même société que la présente demande, un dispositif de fixation comprenant une goupille solidaire d'une bague ouverte qui vient entourer partiellement la tringle. Là encore, la bague reste visible de l'extérieur et est susceptible d'être accrochée.

Par ailleurs US 6 565 280 montre un dispositif de fixation d'un accessoire de sport, par exemple un fanion, à une tige. Il ne s'agit pas d'une tringle de manivelle de volet roulant qui présente généralement une section transversale circulaire et pour laquelle se pose un problème d'entraînement en rotation d'un organe.

L'invention a pour but, surtout, de fournir un dispositif de fixation d'une tringle de manivelle de volet roulant, à un organe lié en rotation à une sortie de caisson de volet ou à la manivelle, qui soit d'une réalisation simple et d'une mise en oeuvre rapide, et qui soit peu visible de l'extérieur.

Un dispositif selon l'invention, est décrit dans la revendication 1.

Le clip peut comporter, vers son extrémité éloignée de la rampe, un ergot transversal en saillie du côté opposé à la rampe, propre à entrer dans un trou du tenon, d'axe perpendiculaire à la direction longitudinale du tenon. Le trou du tenon est avantageusement situé vers l'extrémité du tenon éloignée de sa base assurant l'ancrage à l'organe de sorte que cette base n'est pas affaiblie

Le méplat prévu à l'intérieur de la section creuse de l'élément peut comporter dans sa partie médiane une rainure, et l'extrémité de l'ergot, qui fait saillie sur le tenon du côté opposé au clip, entre dans la rainure prévue dans le méplat, sur la surface interne de la tringle.

De préférence, le clip comporte à son extrémité éloignée de la rampe un moyen de maintien sur le tenon. Le moyen de maintien peut comprendre une excroissance qui vient recouvrir l'extrémité du tenon. L'excroissance peut présenter une surface intérieure concave ou convexe, tournée vers le tenon, qui présente une extrémité de forme complémentaire convexe ou concave qui vient épouser la surface de l'excroissance, la coopération de l'excroissance avec l'extrémité du tenon assurant le maintien du clip sur le tenon.

L'âme du tenon peut être centrée par rapport à l'axe géométrique de l'organe et à celui de la tringle, le tenon présentant deux faces planes symétriques par rapport audit axe de l'organe, tandis que deux clips sont installés en vis-à-vis contre les faces planes du tenon pour assurer la liaison entre l'organe et la tige.

La section creuse de l'élément et de la tringle peut présenter la forme d'une croix à angle droit composée de deux rainures en vis-à-vis pour recevoir les clips, et de deux autres rainures à angle droit par rapport aux précédentes pour recevoir les tranches du tenon.

Les faces plates du tenon constituent des méplats propres à coopérer avec des méplats formés par des faces sensiblement radiales des rainures destinées à recevoir le tenon, pour assurer la liaison en rotation.

L'un des clips peut comporter, à son extrémité éloignée de la partie décalée, un ergot transversal comportant un logement cylindrique s'ouvrant du côté opposé à ladite partie décalée, et un doigt en saillie transversale, solidaire de l'extrémité inférieure du clip, l'autre clip présentant, à son extrémité inférieure un ergot avec un logement et un doigt qui se trouve plus près de la partie décalée pour correspondre à l'ergot du premier clip, tandis que deux trous sont prévus dans le tenon pour recevoir les ergots respectifs dans les logements desquels s'engagent les doigts.

Chaque clip peut être réalisé en matière plastique.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est une vue en perspective éclatée, partielle, du dispositif de fixation selon l'invention entre une tringle de manivelle de volet roulant et un tenon lié à une sortie de caisson.
Fig. 2 montre la mise en place d'un clip élastique sur le tenon.
Fig. 3 montre, en perspective, l'assemblage réalisé entre le tenon et la tringle de manivelle.
Fig. 4 montre, en coupe verticale axiale, à plus grande échelle la mise en place du tenon et du clip dans la tringle de manivelle.
Fig. 5 montre, semblablement à Fig. 4, la phase d'introduction, avant engagement de l'extrémité décalée du clip dans la tringle.
Fig. 6 montre, semblablement à Fig. 5, l'assemblage réalisé.
Fig. 7 est une coupe suivant la ligne VII-VII de Fig. 6.
Fig.8 est une vue en élévation d'une variante de réalisation du dispositif de fixation avant assemblage entre tenon et tringle.
Fig. 9 montre, en perspective éclatée, les éléments du dispositif de Fig.8.
Fig.10 est une coupe axiale, à plus grande échelle, du dispositif de Fig.8 assemblé, et
Fig.11 est une coupe en perspective selon la ligne XI-XI de Fig.10.

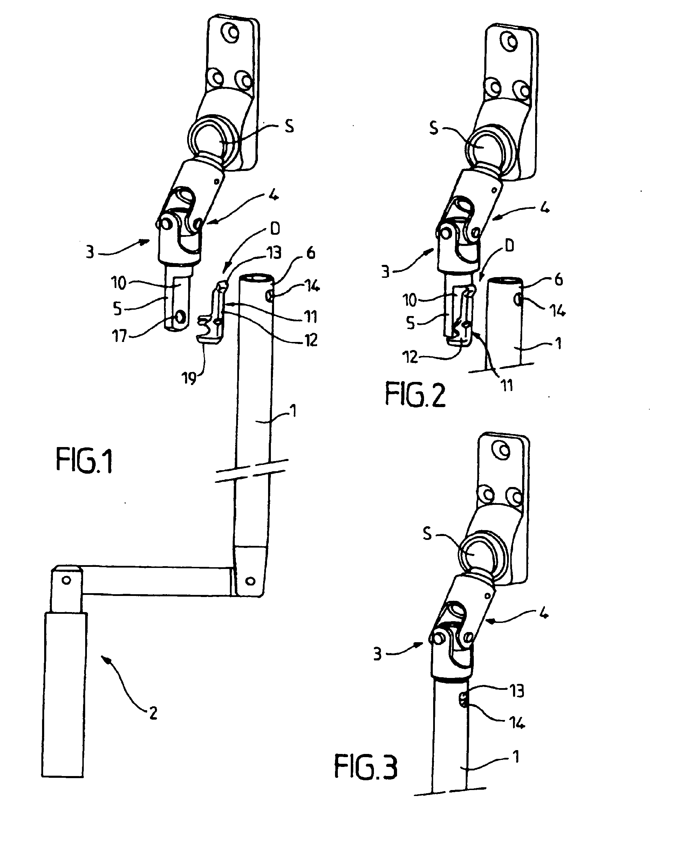

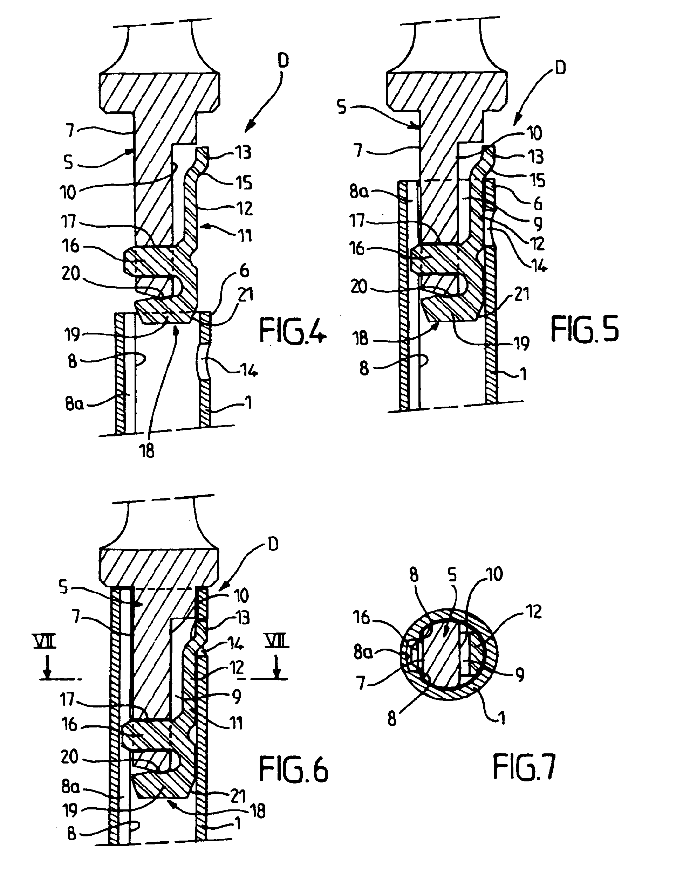

En se reportant aux dessins, notamment à Fig. 1, on peut voir un dispositif de fixation D d'une tringle 1 de manivelle 2 de volet roulant à un organe 3 lié en rotation par une genouillère 4 à une sortie S de caisson de volet roulant. Un tenon 5 solidaire de l'organe 3 est prévu pour être engagé dans un élément extérieur creux 6 solidaire de la tringle 1 et constitué par l'extrémité supérieure de cette tringle. Une liaison de forme en rotation est prévue entre la tringle 1 et le tenon 5 par coopération d'un méplat 7 (Fig.7) prévu sur le tenon 5 et d'un autre méplat 8 prévu à l'intérieur de la section creuse de l'élément 6. Le méplat 8 comporte dans sa partie médiane une rainure 8a pour recevoir un élément en saillie dont il sera question plus loin.

La transmission du couple de rotation entre tringle 1 et tenon 5 est assurée par la forme intérieure entraînante 8 de la tringle 1 coopérant avec le méplat 7 du tenon 5.

Un espace libre longitudinal 9 (Fig.6 et 7) est réservé à l'intérieur de l'élément creux 6 entre le tenon 5 et la paroi intérieure de l'élément 6. Cet espace longitudinal 9 résulte de la présence d'un autre méplat 10 sur le tenon 5 du côté opposé au méplat 7. Le méplat 10, dans l'exemple représenté sur Fig. 7, est parallèle au méplat 7 et s'étend suivant une corde proche du diamètre de la section circulaire intérieure de la tringle, supérieure à celle du méplat 7. L'axe géométrique longitudinal du tenon 5 est décalé, par rapport à l'axe géométrique de l'organe 3 et à celui de la tringle 1, vers la rainure 8a, ce qui permet de dégager un espace libre 9 entre le méplat 10 et la surface interne de la tringle 1 proche de la moitié de la section intérieure de cette tringle.

Un organe 11 d'arrêt est logé dans l'espace libre 9 pour établir une liaison en translation, suivant la direction de l'axe géométrique de la tringle 1, entre le tenon 5 et la tringle 1, cette liaison étant escamotable depuis l'extérieur de la tringle. L'organe d'arrêt 11, de forme allongée, comprend un clip élastique 12 avantageusement réalisé en matière plastique, installé sur le tenon 5 pour s'engager à l'intérieur de la tringle dans l'espace libre 9. Le clip 12 comporte une partie 13, notamment à son extrémité supérieure selon l'exemple de réalisation, décalée transversalement vers l'extérieur pour s'engager dans un trou 14 de la tringle 1 en fin d'assemblage et pour assurer l'arrêt en translation du tenon 5 relativement à la tringle. Le clip 12 comporte, vers sa partie 13 décalée, une rampe extérieure 15 propre à coopérer avec l'extrémité supérieure de la tringle pour assurer l'effacement du clip et son entrée dans la tringle 1.

Le clip 12 présente, vers son extrémité éloignée de la rampe 15, un ergot transversal 16 en saillie du côté opposé à la rampe, propre à entrer dans un trou 17 du tenon 5. L'axe géométrique du tenon 16 est perpendiculaire à la direction longitudinale du tenon 5, qui est également la direction d'introduction dans la tringle 1. La coopération de l'ergot 16 et du trou 17 permet de positionner en translation le tenon 5 relativement à la tringle 1.

Le trou 17 est situé vers l'extrémité du tenon 5 éloignée de sa base assurant l'ancrage à l'organe 3 de sorte que cette base n'est pas affaiblie. Le trou 14 de la tringle est proche de l'extrémité de la tringle et la partie 13 décalée parcourt un trajet réduit, avec frottement contre la surface intérieure de la tringle, avant d'entrer dans le trou 14.

Le clip 12 comporte, à son extrémité éloignée de la rampe 15, un moyen de maintien 18 sur le tenon 5. Ce moyen de maintien 18 est avantageusement formé par une excroissance 19, transversalement à la direction longitudinale du clip, sensiblement parallèle à l'ergot 16, et située du même côté que l'ergot 16 par rapport à la rampe 15. La surface intérieure 20 de l'excroissance 19, tournée vers le tenon 5, présente une section transversale concave sensiblement en V tournée vers le tenon 5. Ce dernier présente à son extrémité une forme complémentaire convexe qui vient épouser la section concave 20. La coopération de la surface concave 20 avec l'extrémité convexe du tenon 5 assure le maintien du clip 12 sur le tenon.

L'extrémité inférieure du clip 12 présente, du côté de la tringle 1, un chanfrein 21 facilitant l'entrée du clip 12 dans la tringle.

Le montage du clip 12 sur le tenon 5, et la fixation de la tringle 1 au tenon 5 s'effectuent de la manière suivante.

Le clip 12 est mis en place sur le tenon 5, du côté du méplat 10, par introduction de l'ergot 16 dans le trou 17 et coopération de la surface concave 20 avec l'extrémité convexe du tenon 5. Le clip 12 est ainsi maintenu sur le tenon 5.

L'ensemble ainsi formé est introduit dans l'extrémité supérieure de la tringle 1, selon une orientation relative telle que l'extrémité de l'ergot 16, qui fait saillie sur le tenon 5 du côté opposé au clip 12, entre dans la rainure 8a prévue dans le méplat 8, sur la surface interne de la tringle 1.

Lorsque la rampe 15 du clip 12 entre en contact avec le bord interne de l'extrémité supérieure de la tringle, le clip 12 est repoussé vers l'intérieur et peut entrer dans la tringle 1, la partie décalée 13 appuyant contre la surface interne de la tringle. Lorsque cette partie décalée ou extrémité 13 arrive au niveau du trou 14, par suite de l'enfoncement progressif du tenon 5 dans la tringle, l'extrémité 13 par élasticité s'écarte radialement et pénètre dans le trou 14 assurant ainsi la liaison en translation, suivant la direction de l'axe géométrique de la tringle 1, entre le tenon 5 et cette tringle.

Lorsque les pièces sont assemblées, comme visible sur Fig. 3, seule l'extrémité 13 du clip est visible à travers le trou 14, au voisinage de l'extrémité de la tringle.

Pour séparer le tenon 5 de la tringle 1, il suffit d'effacer l'extrémité 13 vers l'intérieur de la tringle en la repoussant, à travers le trou 14, à l'aide d'un outil, tel qu'une pointe, et d'exercer une traction sur le tenon 5 ou sur la tringle 1 dans le sens de la séparation longitudinale des deux pièces.

Selon l'invention, le clip 12 est installé à l'intérieur de la tringle 1 et non pas à l'extérieur. Ce clip 12 s'escamote au moment de l'assemblage de la tringle 1 et du tenon 5 grâce à la rampe 15. En fin d'insertion, le clip 12 remonte dans le trou 14 de la tringle et assure ainsi le maintien en place.

Cette solution présente l'avantage de rester très intégrée à l'intérieur de la tringle. Il n'y a pratiquement rien de visible à l'extérieur, seulement un trou 14 sur la tringle et l'extrémité 13.

Comme le couple de manoeuvre est transmis de la tringle 1 au tenon 5 par la coopération des méplats 7 et 8, l'ergot 16 n'est pas soumis à ce couple. Selon l'invention, les fonctions d'arrêt axial et d'arrêt en rotation pour la transmission du couple sont séparées.

Le clip 12 consiste en une pièce d'exécution très simple qui, installée sur le tenon 5, est maintenue en place dans l'attente du montage sur la tringle 1 de manivelle.

La description a été effectuée à propos de l'assemblage de la tringle 1 à son extrémité supérieure avec un tenon 5 solidaire de la genouillère 4 de sortie S de caisson.

Un assemblage similaire peut être prévu à l'extrémité inférieure de la tringle 1 entre celle-ci et la manivelle 2.

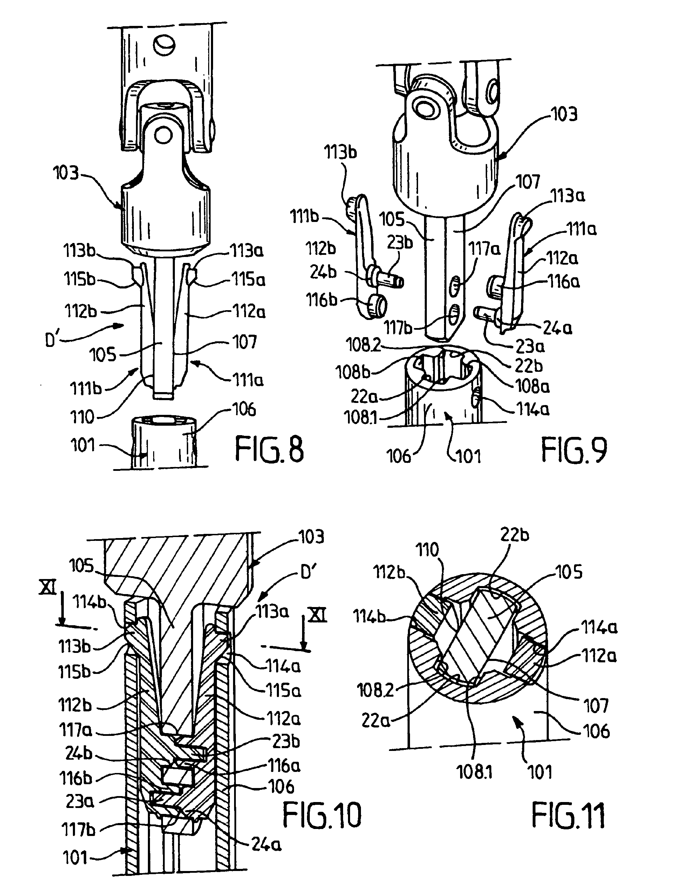

En se reportant aux Fig. 8-11, on peut voir une variante de réalisation d'un dispositif D' de fixation, selon l'invention, entre une tringle 101 de manivelle de volet roulant et un organe 103 lié en rotation à une sortie de caisson de volet ou à la manivelle.

Les éléments du dispositif D' identiques ou similaires à des éléments déjà décrits précédemment seront désignés par une référence numérique égale à la somme du nombre 100 et de la référence utilisée sur les figures précédentes ; leur description ne sera pas reprise ou ne sera effectuée que succinctement.

Selon cette variante de réalisation D', l'âme du tenon 105 est centrée par rapport à l'axe géométrique de l'organe cylindrique 103 et celui de la tringle. Le tenon 105 est symétrique par rapport à son plan médian qui contient l'axe géométrique de l'organe cylindrique 103.

Le fait de centrer l'âme du tenon 105 dans la tringle 101 laisse moins de place du côté destiné à l'insertion du clip par rapport à la solution des figures précédentes. Le clip devient moins épais et donc moins robuste, de sorte que l'on prévoit d'installer deux clips 112a, 112b en vis-à-vis pour une résistance mécanique suffisante.

L'élément extérieur 106 est constitué par l'extrémité supérieure de la tringle 101. La section creuse de l'élément 106 et de la tringle a la forme d'une croix à angle droit (Fig.9) constituée de deux rainures 108a, 108b, en vis-à-vis et de deux autres rainures 22a, 22b à angle droit par rapport aux précédentes. Le tenon 105 est engagé dans l'élément creux 106 de telle sorte que ses tranches entrent dans les rainures respectives 22a, 22b.

Les faces plates 107, 110 du tenon 105 sont symétriques par rapport à l'axe géométrique longitudinal du tenon. Ces faces 107, 110 constituent des méplats prévus pour coopérer avec des méplats 108.1, 108.2 formés par des bordures sensiblement radiales des rainures 22a, 22b. Une liaison de forme en rotation est ainsi réalisée entre le tenon 105 et l'élément creux 106. Les rainures 108a, 108b sont prévues pour recevoir respectivement un organe d'arrêt 111a, 111b formé par un clip élastique 112a, 112b. Chaque clip 112a, 112b est avantageusement réalisé en matière plastique et comporte une partie 113a, 113b, notamment à son extrémité supérieure, décalée transversalement vers l'extérieur pour s'engager dans un trou 114a, 114b de l'organe 106, en fin d'assemblage et assurer ainsi l'arrêt en translation du tenon 105 relativement à l'organe 106 et à la tringle 101. Chaque clip 112a, 112b comporte, vers sa partie 113a, 113b décalée, une rampe extérieure 115a, 115b propre à coopérer avec l'extrémité supérieure de la tringle pour assurer l'effacement du clip et son entrée dans la tringle.

Le clip 112a comporte, à son extrémité éloignée de la rampe 115a, un ergot transversal 116a comportant un logement cylindrique s'ouvrant du côté opposé à la partie 113a. Cet ergot 116a est situé à une certaine distance de l'extrémité inférieure du clip 112a. Un doigt 23a, en saillie transversale du côté opposé à la partie 113a, est solidaire de l'extrémité inférieure du clip 112a. La base 24a du doigt 23a présente un diamètre extérieur supérieur à celui du doigt, et égal au diamètre extérieur de l'ergot 116a.

Deux trous 117a, 117b, de même diamètre, sont prévus dans le tenon 105. Le trou supérieur 117a est destiné à recevoir à frottement doux l'ergot 116a de diamètre extérieur égal à celui du trou 117a. Le doigt 23a entre dans le trou 117b, et est centré en fin d'introduction par l'embase 24a qui présente le même diamètre que le trou 117b.

L'autre clip 112b présente, à son extrémité inférieure, un ergot 116b avec un logement pour le doigt 23a, tandis qu'un doigt 23b est prévu plus haut pour correspondre à l'ergot 116a.

Pour l'assemblage, comme illustré sur Fig. 10, les clips 112a, 112b sont plaqués contre les faces du tenon 105 avec entrée des ergots 116a, 116b dans les trous 117a, 117b et engagement des doigts 23a, 23b dans les logements des ergots 116b, 116a. Cet engagement est prévu avec un serrage suffisant pour le maintien assemblé des deux clips 112a, 112b contre le tenon 105.

Lorsque les clips ont été emboîtés comme illustré sur Fig. 10, l'assemblage du dispositif est obtenu en engageant le tenon 105 dans l'élément creux 106 et la tringle 101, de manière que les clips 112a, 112b entrent dans les rainures 108a, 108b, tandis que les tranches du tenon 105 entrent dans les rainures 22a, 22b. En fin d'engagement, les parties déportées 113a, 113b sont d'abord effacées vers l'intérieur par la coopération des rampes 115a, 115b avec le bord supérieur de la tringle, puis les parties 113a, 113b entrent dans les trous 114a, 114b et assurent le verrouillage sur la tringle.

Le dispositif de fixation D' décrit précédemment à propos de l'extrémité supérieure de la tringle peut être utilisé de la même manière au niveau de la manivelle, à l'extrémité inférieure de la tringle.

## Revendications

1. Dispositif (D, D') de fixation entre une tringle (1, 101) de manivelle de volet roulant et un organe (3, 103) lié en rotation à une sortie (S) de caisson de volet ou à la manivelle (2), comprenant un tenon (5, 105) solidaire de l'organe ou de la tringle, engagé dans un élément extérieur creux (6, 106) solidaire de la tringle ou de l'organe, une liaison de forme en rotation entre l'élément creux (6, 106) et le tenon (5, 105) étant assurée par coopération d'au moins un méplat (7, 107) sur le tenon (5, 105) et d'au moins un autre méplat (8 ; 108.1) prévu à l'intérieur de la section creuse de l'élément creux (6,106),
**caractérisé en ce que** :
- un trou (17;117b), d'axe perpendiculaire à la direction longitudinale du tenon, est situé vers l'extrémité du tenon (5 ; 105) éloignée de sa base assurant l'ancrage à l'organe (3 ; 103) de sorte que cette base n'est pas affaiblie,
- au moins un clip (12; 112b) comportant un ergot transversal (16 ; 116b) propre à entrer dans le trou (17 ; 117b) du tenon (5, 105) est installé sur le tenon (5, 105) pour s'engager à l'intérieur de l'élément creux (6, 106) dans un espace libre entre le tenon (5, 105) et la paroi intérieure de l'élément creux (6, 106) résultant d'au moins un autre méplat (10, 110) sur le tenon,
- le clip (12 ; 112b) comporte une partie (13 ; 113b) décalée transversalement vers l'extérieur pour s'engager dans un trou (14 ; 114b) de l'élément extérieur (6, 106) en fin d'assemblage, et établir une liaison en translation escamotable entre le tenon (5, 105) et l'élément extérieur (6, 106), une rampe (15 ; 115b) étant prévue vers la partie décalée (13 ; 113b) pour coopérer avec l'extrémité de la tringle (1,101) et assurer l'effacement du clip (12 ; 112b) et son entrée dans la tringle,
- ledit ergot transversal (16 ; 116b) étant en saillie du côté opposé à la rampe, vers l'extrémité du clip éloignée de la rampe (15, 115b).

2. Dispositif de fixation selon la revendication 1, **caractérisé en ce que** le méplat (8) prévu à l'intérieur de la section creuse de l'élément (6) comporte dans sa partie médiane une rainure (8a), et l'extrémité de l'ergot (16), qui fait saillie sur le tenon (5) du côté opposé au clip (12), entre dans la rainure (8a) prévue dans le méplat (8), sur la surface interne de la tringle (1).

3. Dispositif de fixation selon la revendication 1 ou 2, **caractérisé en ce que** le clip (12) comporte à son extrémité éloignée de la rampe (15) un moyen de maintien (18) sur le tenon (5).

4. Dispositif de fixation selon la revendication 3, **caractérisé en ce que** le moyen de maintien comprend une excroissance (19) qui vient recouvrir l'extrémité du tenon.

5. Dispositif de fixation selon la revendication 4, **caractérisé en ce que** l'excroissance (19) présente une surface intérieure (20) concave ou convexe tournée vers le tenon (5), qui présente une extrémité de forme complémentaire convexe ou concave qui vient épouser la surface de l'excroissance, la coopération de l'excroissance avec l'extrémité du tenon assurant le maintien du clip (12) sur le tenon.

6. Dispositif de fixation selon la revendication 1, **caractérisé en ce que** l'âme du tenon (105) est centrée par rapport à l'axe géométrique de l'organe (103) et à l'axe géométrique de la tringle (101), le tenon présente deux faces planes (107,110) symétriques par rapport audit axe de l'organe (103), et deux clips (112a, 112b) sont installés en vis-à-vis contre les faces planes du tenon pour assurer la liaison entre l'organe et la tige.

7. Dispositif de fixation selon la revendication 6, **caractérisé en ce que** la section creuse de l'élément (106) et de la tringle présente la forme d'une croix à angle droit composée de deux rainures (108a, 108b) en vis-à-vis pour recevoir les clips, et de deux autres rainures (22a, 22b) à angle droit par rapport aux précédentes pour recevoir les tranches du tenon (105).

8. Dispositif de fixation selon la revendication 7, **caractérisé en ce que** les faces plates (107, 110) du tenon (105) constituent des méplats propres à coopérer avec des méplats (108.1, 108.2) formés par des faces sensiblement radiales des rainures (22a, 22b) pour assurer la liaison en rotation.

9. Dispositif de fixation selon l'une des revendications 6 à 8, **caractérisé en ce que** l'un des clips (112a) comporte, à son extrémité éloignée de la partie décalée (113a), un ergot transversal (116a) comportant un logement cylindrique s'ouvrant du côté opposé à ladite partie décalée (113a), et un doigt (23a) en saillie transversale, solidaire de l'extrémité inférieure du clip (112a), l'autre clip (112b) présente, à son extrémité inférieure un ergot (116b) avec un logement et un doigt (23b) qui se trouve plus près de la partie décalée (113b) pour correspondre à l'ergot (116a) du premier clip (112a), tandis que deux trous (117a, 117b) sont prévus dans le tenon (105). pour recevoir à frottement doux les ergots respectifs (116a, 116b) dans les logements desquels s'engagent les doigts (23b , 23a).

10. Dispositif de fixation selon l'une quelconque des revendications précédentes, **caractérisé en ce que** chaque clip (12 ; 112a, 112b), est réalisé en matière plastique.

## Claims

1. Fixing device (D, D') between a handle rod (1, 101) of a roller shutter and a member (3, 103) rotationally linked to a shutter casing output (S) or to the handle (2), comprising a tenon (5, 105) attached to the member or to the rod, engaged in a hollow external element (6, 106) attached to the rod or to the member, a rotational form link between the hollow element (6, 106) and the tenon (5, 105) being provided by cooperation of at least one flat (7, 107) on the tenon (5, 105) and at least one other flat (8; 108.1) provided on the inside of the hollow section of the hollow element (6, 106),
**characterized in that**:
- a hole (17; 117b), of axis perpendicular to the longitudinal direction of the tenon, is situated towards the end of the tenon (5; 105) away from its base ensuring the anchoring to the member (3; 103) so that this base is not weakened,
- at least one clip (12; 112b) comprising a transversal snug (16; 116b) designed to enter into the hole (17; 117b) in the tenon (5, 105) is installed on the tenon (5, 105) to be engaged inside the hollow element (6, 106) in a free space between the tenon (5, 105) and the internal wall of the hollow element (6, 106) resulting from at least one other flat (10, 110) on the tenon,
- the clip (12; 112b) comprises a part (13; 113b) offset transversally towards the outside to be engaged in a hole (14; 114b) in the external element (6, 106) at the end of assembly, and establish a retractable translational link between the tenon (5, 105) and the external element (6, 106), a ramp (15; 115b) being provided towards the offset part (13; 113b) to cooperate with the end of the rod (1, 101) and ensure the moving aside of the clip (12; 112b) and its entry into the rod,
- said transversal snug (16; 116b) protruding from the side opposite to the ramp, towards the end of the clip away from the ramp (15, 115b).

2. Fixing device according to Claim 1, **characterized in that** the flat (8) provided inside the hollow section of the element (6) comprises, in its median part, a groove (8a), and the end of the snug (16), which protrudes on the tenon (5) on the side opposite to the clip (12), enters the groove (8a) provided in the flat (8), on the internal surface of the rod (1).

3. Fixing device according to Claim 1 or 2, **characterized in that** the clip (12) comprises, at its end away from the ramp (15), a means (18) for maintaining on the tenon (5).

4. Fixing device according to Claim 3, **characterized in that** the maintaining means comprises a protuberance (19) which covers the end of the tenon.

5. Fixing device according to Claim 4, **characterized in that** the protuberance (19) has a concave or convex internal surface (20) facing towards the tenon (5), which has an end of complementary convex or concave form which snugly fits the surface of the protuberance, the cooperation of the protuberance with the end of the tenon ensuring the maintaining of the clip (12) on the tenon.

6. Fixing device according to Claim 1, **characterized in that** the web of the tenon (105) is centred in relation to the geometrical axis of the member (103) and to the geometrical axis of the rod (101), the tenon has two planar faces (107, 110) that are symmetrical in relation to said axis of the member (103), and two clips (112a, 112b) are installed facing one another against the planar faces of the tenon to ensure the link between the member and the rod.

7. Fixing device according to Claim 6, **characterized in that** the hollow section of the element (106) and of the rod is in the form of a right-angled cross consisting of two grooves (108a, 108b) facing one another to receive the clips, and two other grooves (22a, 22b) at right angles in relation to the preceding ones to receive the edges of the tenon (105).

8. Fixing device according to Claim 7, **characterized in that** the flat faces (107, 110) of the tenon (105) constitute flats designed to cooperate with flats (108.1, 108.2) formed by substantially radial faces of the grooves (22a, 22b) to ensure the rotational link.

9. Fixing device according to one of Claims 6 to 8, **characterized in that** one of the clips (112a) comprises, at its end away from the offset part (113a), a transversal snug (116a) comprising a cylindrical recess opening on the side opposite to said offset part (113a), and a transversally protruding finger (23a), attached to the bottom end of the clip (112a), the other clip (112b) has, at its bottom end, a snug (116b) with a recess and a finger (23b) which is located closer to the offset part (113b) to correspond to the snug (116a) of the first clip (112a), whereas two holes (117a, 117b) are provided in the tenon (105), to receive with soft friction the respective snugs (116a, 116b) in the recesses of which the fingers (23b, 23a) are engaged.

10. Fixing device according to any one of the preceding claims, **characterized in that** each clip (12; 112a, 112b) is made of plastic material.

## Patentansprüche

1. Befestigungsvorrichtung (D, D') zwischen einer Handkurbelstange (1, 101) eines Rollladens und einem Organ (3, 103), das drehbar mit einem Ausgang (S) eines Rollladenkastens oder der Handkurbel (2) verbunden ist, mit einer fest mit dem Organ oder der Stange verbundenen Lasche (5, 105), die in ein einstückig mit der Stange oder dem Organ ausgebildeten hohlen äußeren Element (6, 106) eingesetzt ist, wobei eine formschlüssige Drehverbindung zwischen dem hohlen Element (6, 106) und der Lasche (5, 105) durch das Zusammenwirken mindestens einer Abflachung (7, 107) an der Lasche (5, 105) und mindestens einer anderen Abflachung (8; 108.1), die im Inneren des hohlen Querschnitts des hohlen Elements (6, 106) vorgesehen ist, gewährleistet ist,
**dadurch gekennzeichnet, dass**
- ein Loch (17; 117b), dessen Achse senkrecht zur Längsrichtung der Lasche verläuft, in Richtung des von der Basis entfernten Endes der Lasche (5; 105) vorgesehen ist, welches die Verbindung mit dem Organ (3; 103) gewährleistet, derart, dass die Basis nicht geschwächt ist,
- an der Lasche (5, 105) mindestens ein Clip (12; 112b) angebracht ist, der einen quergerichteten Stift (16; 116b), welcher zum Eintreten in das Loch (17; 117b) der Lasche (5, 105) geeignet ist, aufweist, um im Inneren des hohlen Elements (6, 106) in einen Freiraum zwischen der Lasche (5, 105) und der Innenwand des hohlen Elements (6, 106) einzugreifen, welcher sich durch mindestens eine weitere Abflachung (10, 110) der Lasche ergibt,
- der Clip (12; 112b) einen in Querrichtung nach außen versetzten Bereich (13; 113b) aufweist, der am Ende der Montage in ein Loch (14; 114b) des äußeren Elements (6, 116) eingreift und eine ausrückbare Schiebeverbindung zwischen der Lasche (5, 105) und dem äußeren Element (6, 106) herstellt, wobei eine Rampe (15; 115b) in Richtung des versetzten Bereichs (13; 113b), um mit dem Ende der Stange (1, 101) zusammenzuwirken und das Einziehen des Clips (12; 112b) und dessen Eintreten in die Stange zu gewährleisten,
- wobei der quergerichtete Stift (16; 116b) auf der der Rampe entgegengesetzten Seite nahe dem von der Rampe (15, 115b) entfernten Ende des Clips absteht.

2. Befestigungsvorrichtung nach Anspruch 1, **dadurch gekennzeichnet, dass** die im Inneren des hohlen Querschnitts des Elements (6) vorgesehene Abflachung (8) in ihrem Mittelbereich eine Nut (8a) aufweist, und das Ende des Stifts (16), das auf der dem Clip (12) abgewandten Seite der Lasche (5) aus dieser ragt, in die in der Abflachung (8) vorgesehene Nut (8a) auf der Innenseite der Stange (1) eingreift.

3. Befestigungsvorrichtung nach Anspruch 1 oder 2, **dadurch gekennzeichnet, dass** der Clip (12) an seinem von der Rampe (15) entfernten Ende ein Element (18) zum Halten an der Lasche (5) aufweist.

4. Befestigungsvorrichtung nach Anspruch 3, **dadurch gekennzeichnet, dass** die Halteeinrichtung einen Vorsprung (19) aufweist, welcher das Ende der Lasche bedeckt.

5. Befestigungsvorrichtung nach Anspruch 4, **dadurch gekennzeichnet, dass** der Vorsprung (19) eine konkave oder konvexe Innenfläche (20) aufweist, die zu der Lasche (5) gerichtet ist, welche ein Ende mit komplementärer konvexer oder konkaver Form aufweist, welche der Fläche des Vorsprungs angepasst ist, wobei das Zusammenwirken des Vorsprungs mit dem Ende der Lasche das Halten des Clips (12) an der Lasche gewährleistet.

6. Befestigungsvorrichtung nach Anspruch 1, **dadurch gekennzeichnet, dass** der Steg der Lasche (105) in Bezug auf die geometrische Achse des Organs (103) und die geometrische Achse der Stange (101) zentriert ist, die Lasche zwei in Bezug auf die Achse des Organs (103) symmetrische, flache Seiten (107, 110) aufweist, und zwei Clips (112a, 112b) einander gegenüberliegend an den flachen Seiten der Lasche angebracht sind, um die Verbindung zwischen dem Organ und der Stange zu gewährleisten.

7. Befestigungsvorrichtung nach Anspruch 6, **dadurch gekennzeichnet, dass** der hohle Querschnitt des Elements (106) und der Stange die Form eines rechtwinkligen Kreuzes aufweist, das aus zwei einander gegenüberliegenden Nuten (108a, 108b) zur Aufnahme der Clips und zwei weiteren, zu den genannten Nuten rechtwinkligen Nuten (22a, 22b) zur Aufnahme der Ränder der Lasche (105) gebildet ist.

8. Befestigungsvorrichtung nach Anspruch 7, **dadurch gekennzeichnet, dass** die flachen Seiten (107, 110) der Lasche (105) Abflachungen bilden, die geeignet sind, mit Abflachungen (108.1, 108.2), welche im Wesentlichen durch radiale Flächen der Nuten (22a, 22b) gebildet sind, zusammenzuwirken, um eine Drehverbindung zu gewährleisten.

9. Befestigungsvorrichtung nach einem der Ansprüche 6 bis 8, **dadurch gekennzeichnet, dass** einer der Clips (112a) an seinem dem versetzten Bereich (113a) abgewandten Ende einen quergerichteten Stift (116a) mit einer auf der dem versetzten Bereich (113a) abgewandten Seite offenen zylindrischen Aufnahme und einen einstückig mit dem unteren Ende des Clips (112a) ausgebildeten, in Querrichtung vorstehenden Finger (23a) aufweist, wobei der andere Clip (112b) an seinem unteren Ende einen Stift (116b) mit einer Aufnahme und einen Finger (23b) aufweist, der sich näher an dem versetzten Bereich (113b) befindet, um dem Stift (116a) des ersten Clips (112a) zu entsprechen, während in der Lasche (105) zwei Löcher (117a, 117b) vorgesehen sind, um die jeweiligen Stifte (116a, 116b) im Passsitz aufzunehmen, in deren Aufnahme die Finger (23b, 23a) eingreifen.

10. Befestigungsvorrichtung nach einem der vorhergehenden Ansprüche, **dadurch gekennzeichnet, dass** jeder Clip (12; 112a, 112b) aus Kunststoff besteht.
